(19) Europäisches Patentamt

European Patent Office

Office européen des brevets

(11) **EP 2 825 590 B1**

(12) **EUROPEAN PATENT SPECIFICATION**

(45) Date of publication and mention of the grant of the patent:
**19.04.2017 Bulletin 2017/16**

(21) Application number: **13760932.7**

(22) Date of filing: **07.03.2013**

(51) Int Cl.:
**C08J 9/12** (2006.01)

(86) International application number:
**PCT/US2013/029636**

(87) International publication number:
**WO 2013/138158 (19.09.2013 Gazette 2013/38)**

(54) **LIGHT WEIGHT ARTICLES, COMPOSITE COMPOSITIONS, AND PROCESSES FOR MAKING THE SAME**

LEICHTGEWICHTIGE ARTIKEL, VERBUNDSTOFFZUSAMMENSETZUNGEN UND VERFAHREN ZUR HERSTELLUNG DAVON

ARTICLES DE FAIBLE POIDS, COMPOSITIONS COMPOSITE ET PROCÉDÉS DE FABRICATION CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2012 US 201261611764 P**
**13.07.2012 US 201261671188 P**

(43) Date of publication of application:
**21.01.2015 Bulletin 2015/04**

(73) Proprietor: **3M Innovative Properties Company**
**St. Paul, MN 55133-3427 (US)**

(72) Inventors:
• **GUNES, Ibrahim Sedat**
  **Saint Paul, Minnesota 55133-3427 (US)**
• **YALCIN, Baris**
  **Saint Paul, Minnesota 55133-3427 (US)**
• **AMOS, Stephen E.**
  **Saint Paul, Minnesota 55133-3427 (US)**
• **YORDEM, Onur Sinan**
  **Saint Paul, Minnesota 55133-3427 (US)**
• **STONE, Charles T.**
  **Saint Paul, Minnesota 55133-3427 (US)**

(74) Representative: **Herzog, Fiesser & Partner**
**Patentanwälte PartG mbB**
**Isartorplatz 1**
**80331 München (DE)**

(56) References cited:
**EP-A1- 1 686 208         WO-A1-2010/127106**
**WO-A2-2004/009681      US-A1- 2001 012 862**
**US-A1- 2005 238 864     US-A1- 2012 061 870**
**US-B2- 7 364 788**

• **'ENGEL MUCELL® MICROCELLULAR INJECTION MOLDING' ENGEL 07 September 2002, XP055162136 Retrieved from the Internet: <URL:http://www.eurotecsls.com/engel_mucell.htm>**

EP 2 825 590 B1

**Description**

FIELD OF THE TECHNOLOGY

The present disclosure relates to lightweight articles, in particular shaped thermoplastic articles, and processes for making the same.

SUMMARY

In a first aspect, the present description provides a composite material comprising hollow glass microspheres and a microcellular thermoplastic resin.

In a second aspect, the present description provides a molded article comprising hollow glass microspheres and a microcellular thermoplastic resin.

In a further aspect, the present description provides a method, the method comprising feeding to a microcellular foam injection molding machine a first pre-compounded material that comprises an admixture of a thermoplastic and hollow glass microspheres. The method further comprises injecting a supercritical fluid into the admixture and blending the admixture and the supercritical fluid at high pressure to form a blend. The method further comprises injecting the blend into a molding tool.

In particular embodiments of the method, the admixture may further comprise particulate fillers selected from the group consisting of talc, wollastonite, glass fiber, calcium carbonate, carbon black, molded in color pigments, carbon fibers, carbon nanotubes, ceramic microspheres, hollow ceramic microspheres, glass beads, ceramic fibers and nanoparticles.

The particulate fillers selected can be in their neat form or the particles can be surface treated chemically or physically.

In yet further particular embodiments, the method may further comprise feeding to the admixture in the injection molding machine a supercritical fluid selected from the group consisting of $CO_2$ and $N_2$ and blending the admixture and the supercritical fluid within the microcellular foam injection molding machine to form a uniform blend.

In another aspect, the present description provides a method comprising feeding to a microcellular foam injection molding machine a first material that comprises a pre-compounded admixture masterbatch of a thermoplastic and hollow glass microspheres. The method further comprises injecting a supercritical fluid into the admixture and blending the admixture and the supercritical fluid at high pressure to form a blend and injecting the blend into a molding tool.

In particular embodiments of the method, the admixture may further comprise particulate fillers selected from the group consisting of talc, wollastonite, glass fiber, calcium carbonate, carbon black, molded in color pigments, carbon fibers, carbon nanotubes, ceramic microspheres, hollow ceramic microspheres, glass beads, ceramic fibers and nanoparticles.

In yet further particular embodiments, the method may further comprise feeding to the admixture in the injection molding machine a supercritical fluid selected from the group consisting of $CO_2$ and $N_2$ blending the admixture and the supercritical fluid within the microcellular foam injection molding machine to form a uniform blend.

In another aspect, the present description provides a method comprising feeding to a microcellular foam injection molding machine a dry blend comprising a thermoplastic, hollow microspheres, mineral oil and a second material comprising $CO_2$ or $N_2$ in its supercritical state. This method further comprises blending the dry blend and second material within the microcellular injection molding machine to form a molten blend and injecting the blend into a molding tool.

BRIEF DESCRIPTION OF THE DRAWINGS

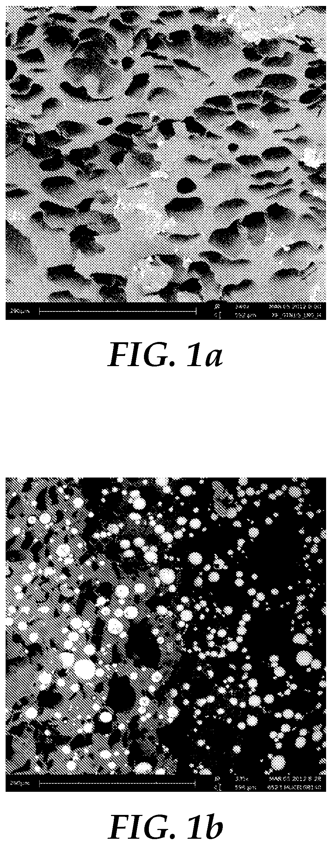

Fig. 1a is an SEM of a polypropylene material that has been foamed using the MuCell process.
Fig. 1b is an SEM of a polypropylene material containing im30k hollow glass microspheres that has been foamed using the MuCell process.

The figures may not be drawn to scale. Like reference numbers may have been used throughout the figures to denote like parts.

DETAILED DESCRIPTION

In the field of plastics there continues to be a need to reduce the density and hence the weight of shaped articles. Such reduction, however, should provide a good balance of aesthetic, dimensional and mechanical properties, and such plastics should be relatively inexpensive and efficient to make. With the recent upsurge in raw material prices, and transportation regulations in the form of vehicle greenhouse gas emissions, the search has intensified to reduce the amount of polymers, especially petroleum based polymers, and make attractive lightweight materials.

Controlled use of gas in its supercritical state during extrusion or injection molding of polymers has been demonstrated to create a foamed and hence a light weight part with smaller amount of polymer resins. The microcellular foaming process poses inherent process optimization challenges (several mold iterations) to produce compliant and aesthetically satisfying parts when significant weight reduction (for instance, above 12% weight reduction) is to be achieved.

The applicants have found, and provide in the present description, that they can surprisingly use microcellular foaming processes in combination with hollow glass microspheres to achieve weight reduction with good mechanical and dimensional properties. As can be seen in the Examples, not all foaming techniques provide desirable results when applied to thermoplastic resins filled with hollow glass microspheres. Surprisingly, the applicants have found that the specific combination of microcellular foaming processes in combination with hollow glass microspheres does provide improved weight reduction with retention of mechanical and dimensional properties. The applicants have further found that microcellular thermoplastic resins comprising hollow glass microspheres and molded articles made therefrom can provide improved weight reduction with retention of mechanical and dimensional properties.

As used herein, and unless the context implies otherwise, the following terms can have the indicated meanings.

The term "microcellular" refers to pore sizes from 0.1 to 100 micrometers typically.

The term "hollow microsphere" refers to a hollow round particle having a maximum dimension of less than one millimeter.

The term "super critical fluid" refers to any substance at a temperature and pressure above its critical point, where distinct liquid and gas phases do not exist. Super critical fluids may have gaseous properties of being able to penetrate solids, and the liquid property of being able to dissolve materials. Useful fluids may include for example $CO_2$, $N_2$, water and argon.

The term "polymer" refers to a macromolecule having at least 10 sequential monomer units (or a substance composed of such macromolecules).

The term "thermoplastic" refers to melt processable polymers.

The term "thermoplastic polyolefin (TPO)" refer to three phase polymer/rubber/ filler blends in which some TPO formulations can omit rubber and/or filler.

The term "shot size" refers to the distance between the screw set position (portion of the full barrel) and the zero screw position of an injection molding screw. Shot size is the measure of the polymer available for injection for each part.

The present description is directed, in one aspect, to methods and materials that can solve the foregoing problems by incorporating hollow glass microspheres in the supercritical gas foaming and shaping process.

In another aspect, the description is directed to processes and compositions for making lightweight and aesthetically and dimensionally stable articles. The processes may include providing as separate materials a first material that includes an admixture of a thermoplastic (e.g., thermoplastic polyolefin) and hollow glass microspheres with or without other particulate fillers (e.g. talc, glass fiber, CaCO3 and etc) and a second material that is essentially a $CO_2$ or $N_2$ in its supercritical fluid state; applying a shear force and high pressure to the first and second materials, while the materials are at an elevated temperature for blending the materials to form a molten blend; injecting a third material and pressurizing the molten blend; discharging the molten blend at which point the supercritical fluid expands into its gas form in the presence of hollow glass microspheres.

In some embodiments, the articles formed using the above mentioned methods and compositions exhibit pore sizes created by the expanding supercritical fluid in the range of 0.1 to 200 micrometers, preferably between 0.1 to 100 microns and more preferably between 0.1 and 30 microns.

Shaping the molten blend containing supercritical fluid can be performed using any one or combination of a number of techniques for making shaped articles. In general, the process runs on molding machines that have been modified to allow the metering, delivery and mixing of the supercritical fluid into the polymer.

In order to impart a microcellular structure to molded parts, the microcellular foaming process relies on the homogeneous cell nucleation that occurs when a single-phase solution of polymer and supercritical fluid passes through an injection gate and into a mold cavity. The addition of supercritical fluid to the molten polymer pressurizes the solution, and the pressure drop as the solution enters the mold allows the supercritical fluid to create cell nuclei. The cells then grow until the material fills the mold, the expansion capabilities of the supercritical fluid are expended, or the flow front freezes.

Thermoplastic materials according to the present description contain at least hollow glass microspheres as one component in the formulation. More particularly, the thermoplastic material may be selected from a polyolefin, a polyamide based engineering thermoplastic, or high temperature engineering polymers such as PBT, polyketones such as but not limited to PEEK and PEK, polysulfones such as but not limited to PSS, PEI, PAI, fluoropolymers such as but not limited to PVDF. Thermoplastic materials according to the present description may, where desirable, comprise a combination of thermoplastic resins.

Thermoplastic resins used in the first material may contain particulate fillers other than hollow glass microspheres. Thermoplastic polyolefins, for instance, may refer to three phase thermoplastic polymer-rubber-filler blends commonly used by resin manufacturers and processing companies. The thermoplastic polymer phase may be based on PP (polypropylene), Copolymer PP or in some occasions PE (polyethylene). The thermoplastic polymer is typically chosen as the matrix phase due to its low cost, ease of processability and wide range of properties that can be adapted by the resin chemistry and/or additives.

Common rubbers in these formulations include butadiene, EPR (Ethylene propylene rubber), EPDM (EP-diene rubber), EO (ethylene-octene), EB (ethylene-butadiene), SEBS (Styrene-ethylene-butadiene-styrene). Rubbers in a three component formulation may, in some embodiments, improve impact properties of the thermoplastic (e.g., polypropylene) phase which is typically low, especially at low temperatures.

Fillers in such formulations include, though are not restricted to, talc, glass fiber, carbon fiber, wollastonite, carbon black, molded in color pigments, carbon fibers, carbon nanotubes, ceramic microspheres, hollow ceramic microspheres, glass beads, ceramic fibers and nanoparticles and MOS whisker fibers (magnesium oxy sulfate from Milliken). Also contemplated herein is the possible inclusion in the compositions and articles described herein of suitable additives of a type such as a clarifier or nucleator, lubricants, slip agents, stabilizers, acid neutralizers, anti-stats, UV stabilizers, thermal stabilizers, and any combination thereof.

Desirably as employed in the process herein, the first material is a pre-compounded polymer masterbatch, which refers to a "concentrate" containing only hollow glass microspheres and thermoplastic resin, while the other particulate fillers (e.g. talc, glass fiber, calcium carbonate, carbon fiber, wollastonite, and MOS whisker fibers (magnesium oxy sulfate), if employed, are incorporated in a second material, preferably of the same thermoplastic of the first material. However, the present description also contemplates processes, compositions and articles relating to materials that are substantially free of filler other than hollow glass microspheres.

Further materials may be added during the process as disclosed herein. These materials may include essentially a $CO_2$ or $N_2$ in its supercritical fluid state. The creation of the single-phase solution, in which the supercritical fluid is fully dissolved and uniformly dispersed in the molten polymer, in some embodiments, takes place inside the injection barrel under carefully controlled process conditions.

The supercritical fluid may be mass flow metered into the polymer for a fixed amount of time. During that dosing period, the right conditions of temperature, pressure and shear are established within the barrel. Back-pressure, screw-speed and barrel-temperature control, as well as the geometry of the mixing screw and supercritical fluid injector, all play a role in establishing the process conditions that create the single-phase solution.

An apparatus for making such microcellular thermoplastic resins may be, for instance, a Mucell® enabled Engel injection molding machine as described further in the example section.

The microcellular molding process described herein uses either nitrogen or carbon dioxide as the foaming agent. Each one has its advantages depending on the application objectives. Differences in the effectiveness of the two foaming agents stem from their behavior in the polymer melt.

Carbon dioxide, which becomes a supercritical fluid at 31.1°C and 72.2 bar, is 4 to 5 times more soluble in polymers than nitrogen, which becomes a supercritical fluid at -147° C and 34 bar. For example, the saturation point in an unfilled polymer is about 1.5 to 2 percent nitrogen by weight, depending on temperature and pressure conditions, while the saturation point of carbon dioxide is closer to 8 percent by weight.

While not being bound by theory the plasticizing nature of carbon dioxide should help preserve hollow microsphere integrity in this high pressure injection molding process.

As will be appreciated, the qualification of materials as "first", "second" and "third" in the present description is for the sake of convenience. Unless specified, use of those terms should not be construed as excluding other materials and should not be construed to imply or suggest any particular sequence of processing steps.

Other ingredients may be employed in addition to the first, second, and third materials discussed herein, including but not limited to one or more fillers, reinforcements, light stabilizers, colorants, flame retardants, thermal stabilizers, nucleators, or the like. It is contemplated that two of the first and second materials can be supplied together as a kit, such as in one or more suitable containers. Such kits as well as its individual component materials are therefore within the scope of the present description.

Articles in accordance with the present description may find use in a number of applications requiring light weight polymer materials. For instance, such articles may be used in transportation vehicles (e.g., as bumpers, grilles, side claddings, rocker panels, fenders, tail-gates, in wire and cable applications, instrument panels, consoles, interior trim, door panels, heater housings, battery supports, headlight housings, front ends, ventilator wheels, reservoirs, and soft pads). The articles may be shaped. The articles may be part of an assembly as well.

It is possible, for example, that a shaped article made according to the teachings herein is laminated to another structure, such as by weld, adhesive bond, fastener or any combination thereof. It is also possible that the articles may be part of an overmolded or co-injection molded assembly.

The articles may be treated in a secondary operation as well for improving their properties. By way of example, without limitation, they may be coated or otherwise surface treated. For example, in one embodiment, the surfaces of a body can optionally undergo a preliminary treatment prior to attachment to another body. This optional treatment can include cleaning and degreasing, plasma coating, corona discharge treating and coating with another surface treatment, coated with a bonding agent, or any combination thereof.

Without intending to be bound by theory, this surprising result is believed to be due to the efficient gas cell nucleation effect in the presence of hollow glass microspheres. In the presence of hollow microspheres, significant density reductions of 12%, 25% or possibly even higher depending on the density of the resin, can be achieved due to the synergistic effect of hollow glass microspheres and improved supercritical gas expansion process, which result cannot be achieved by using only the hollow microspheres or the supercritical gas expansion process (compare Table 6, line 2, 3 with 3 to 8).

Figure 1a is an SEM image of a microcellular polypropylene without the addition of hollow glass microspheres. Figure 1b is a similar microcellular polypropylene but with the addition of hollow glass microspheres. As can be seen from the image of Figure 1b, the hollow glass microspheres are, on average, larger than the voids present in the microcellular polypropylene.

The description herein may further be understood to include the following specific embodiments:

Embodiment 1. A composite material comprising hollow glass microspheres and a microcellular thermoplastic resin.

Embodiment 2. The composite material of embodiment 1 wherein a thermoplastic resin identical in chemical composition to the microcellular thermoplastic resin of claim 1, which identical thermoplastic resin is not microcellular, the identical thermoplastic resin has a density P and the composite material has a density that is less than 0.88P.

Embodiment 3. The composite material of embodiment 1 or 2, further comprising glass fibers.

Embodiment 4. The composite material of any of the preceding embodiments, wherein the microcellular thermoplastic resin is selected from polypropylene, polyethylene, polyamide, and a combination thereof.

Embodiment 5. The composite material of embodiment 4, wherein the polypropylene is a high stiffness polypropylene.

Embodiment 6. The composite material of any of the preceding embodiments, further comprising talc.

Embodiment 7. A molded article comprising hollow glass microspheres and a microcellular thermoplastic resin.

Embodiment 8. A method comprising:

feeding to a microcellular foam injection molding machine a first pre-compounded material that comprises an admixture of a thermoplastic and hollow glass microspheres;
injecting a supercritical fluid into the admixture and blending the admixture and the supercritical fluid at high pressure to form a blend; and
injecting the blend into a molding tool.

Embodiment 9. The method of embodiment 8 wherein the admixture further comprises particulate fillers selected from the group consisting of talc, wollastonite, glass fiber, calcium carbonate, carbon black, molded in color pigments.

Embodiment 10. The method of embodiment 8 or 9, further comprising:

feeding to the admixture in the injection molding machine a supercritical fluid selected from the group consisting of $CO_2$ and $N_2$ ; and
blending the admixture and the supercritical fluid within the microcellular foam injection molding machine to form a uniform blend.

Embodiment 11. A method comprising:

dry blending a first material that comprises a pre-compounded admixture masterbatch of a thermoplastic and hollow glass microspheres with a second thermoplastic material to produce a first blend;
feeding the blend to a microcellular foam injection molding machine;

injecting a supercritical fluid into the blend at high pressure to form a second blend; and
injecting the second blend into a molding tool.

Embodiment 12. The method according to embodiment 11 wherein the admixture further comprises particulate fillers selected from the group consisting of talc, wollastonite, glass fiber, calcium carbonate carbon black, molded in color pigments.

Embodiment 13. The method of embodiment 11 or 12 further comprising:

feeding to the admixture in the injection molding machine a supercritical fluid selected from the group consisting of $CO_2$ and $N_2$ ; and
blending the admixture and the supercritical fluid within the microcellular foam injection molding machine to form a uniform blend..

Embodiment 14. A method comprising:

feeding to a microcellular foam injection molding machine a dry blend comprising a thermoplastic, hollow microspheres and a supercritical fluid selected from the group consisting of $CO_2$ and $N_2$;
blending the dry blend and second material within the microcellular injection molding machine to form a molten blend; and
injecting the blend into a molding tool.

Embodiment 15. The method of embodiment 14 further comprising adding a surface binding agent to the dry blend before injecting the blend into the molding tool.

Embodiment 16. The method of embodiment 14 wherein the dry blend further comprises a mineral oil.

EXAMPLES

Materials

TABLE 1

| Designator | Formula Structure and/or Name | Availability |
|---|---|---|
| PP | Commercially available under the trade designation "Pro-fax" 6523. Polypropylene homopolymer. Melt flow rate 4.00 g/10 min (230°C/2.16kg) | LyondellBasell, Houston, TX |
| PP-HS | Polypropylene homopolymer with high stiffness with a melt flow index of 20 g/10 min (determined at 230°C and under a load of 2.16 kg) under the trade designation of "ADSTIF HA840R". | Ultrapolymers Deutschland GmbH, Germany |
| PP-TRC | Hostacom TRC 787N E high melt flow, 1,850 MPa flexural modulus, Talc-filled (20wt%) thermoplastic polyolefin (TPO) | LyondellBasell Industries, Germany |
| PP-No Talc | Hostacom 787N E Thermoplastic polyolefin (TPO) without Talc | LyondellBasell Industries, Germany |
| Z-101 | DuPont™ Zytel®, A general purpose polyamide 66 resin for injection molding | DuPont, Wilmington, DE |
| iM30K | 3M™ iM30K Hi-Strength Glass Bubbles with 28,000 psi crush strength, 17 micron average diameter and 0.60 g/cc true density. | 3M Company, Saint Paul, MN |
| iM16K | 3M™ iM16K Hi-Strength Glass Bubbles with 16,500 psi crush strength, 20 micron average diameter and 0.460 g/cc true density. | 3M Company, Saint Paul, MN |
| GF-3299 | ChopVantage® HP 3299 Glass Fiber | PPG Industries Fiber Glass Americas, Cheswick, PA |

(continued)

| Designator | Formula Structure and/or Name | Availability |
|---|---|---|
| GF-3540 | ChopVantage® HP 3540 Glass Fiber | PPG Industries Fiber Glass Americas, Cheswick, PA |
| Talc | Jetfine® 3CC | Imerys PFM/Talc |
| PP-MAPP | A maleic anhydride grafted PP (MAPP) homopolymer (Polybond® 3200) | Chemtura |

Example Preparation

The Examples were compounded in a co-rotating intermeshing 24MM twin screw extruder with an L/D 28:1 that had seven barrel temperature zones and a die zone (PRISM TSE-24 MC, available from Thermo Electron Corporation). The Examples contained the materials identified in Table 2.

TABLE 2

| Example | PP | PP-HS | PP-TRC | PP-No Talc | Z-101 | iM30K | iM16K | GF-3299 | GF-3540 | Talc | PP MAPP |
|---|---|---|---|---|---|---|---|---|---|---|---|
| Materials* | | | | | | | | | | | |
| 1A | 100 | - | - | - | - | - | - | - | - | - | - |
| 1B | 80 | - | - | - | - | 20 | - | - | - | | |
| 1C | 76 | - | - | - | - | 20 | - | - | - | - | 4 |
| 2A | - | 78 | - | - | - | - | - | 22 | - | | |
| 2B | - | 74 | - | - | - | 4 | - | 22 | - | | |
| 2C | - | 69 | - | - | - | 9 | - | 22 | - | | |
| 3A | - | - | 100 | - | - | - | - | - | - | | |
| 3B | - | - | 47.5 | 47 | - | 5.5 | - | - | - | | |
| 3C | - | - | 73 | - | - | 17 | - | - | - | | |
| 4A | - | - | - | - | 100 | - | - | - | - | | |
| 4B | - | - | - | - | 90 | - | - | - | 10 | | |
| 4C | - | - | - | - | 84 | 6 | - | - | 10 | | |
| 4D | - | - | - | - | 85.3 | - | 4.7 | - | 10 | | |
| 4E | - | - | - | - | 80 | - | 10 | - | 10 | | |
| 5A | 80 | - | - | - | - | - | - | - | - | 20 | - |
| 5B | 86 | - | - | - | - | - | 4 | - | - | 10 | |

\* Amounts in Table 2 are given in weight percentage

In Example 1, the extruder was equipped with a side stuffer, water bath and a pelletizer system. The iM30K was introduced using the side stuffer downstream in zone 4 of 7 available heating zones of the extruder. Zone 1 was the PP resin feed region and cooled with water. The temperatures in zone 2 to 7 were set to 190 °C, 220 °C, 220 °C, 220 °C, 220 °C, 220 °C respectively. The die temperature was set to 220 °C. The screw rotation speed was set to 300 rpm. Both the main feeder and the side stuffer feeder were volumetric feeders and were calibrated to produce 20 wt% iM30K in PP. The extrudate was cooled in a water bath and pelletized. Twin screw extruder throughput was about 6 lbs/hr. When PP-MAPP was used, it was dry blended with the PP resin prior to being fed into the extruder.

In Example 2, the extruder was equipped with a resin feeder, side stuffer, top feeder, water bath and a pelletizer system. Polymer resin was starve-fed in zone 1 via a volumetric pellet feeder and passed through a set of kneading blocks to ensure its complete melting before glass bubbles were introduced in zone 4. GBs were starve-fed into a side feeder via a supply feeder. Glass fibers were introduced in Zone 6. High channel depth conveying elements (D0/Di: 1.75) were used in GB feed zone 4 as well as subsequent zones. Further downstream in zone 7, a short set of distributive elements were used. Temperature profile and screw speed were the same for all materials. Zone 1 was water cooled and the temperatures in zone 2 to 7 were set to 195°C, 220 °C, 220 °C, 220 °C, 220 °C, 220 °C and 220 °C, respectively. The screw speed was 300 rpm.

In Example 3, the extruder was equipped with a resin feeder, side stuffer, top feeder, water bath and a pelletizer system. Polymer resin (PP-TRC as received or dry blend of PP-TRC and PP-Less Talc) was starve-fed in zone 1 via a volumetric pellet feeder and passed through a set of kneading blocks to ensure its complete melting before glass bubbles were introduced in zone 4. GBs were starve-fed into a side feeder via a supply feeder. High channel depth conveying elements (D0/Di: 1.75) were used in GB feed zone 4 as well as subsequent zones. Temperature profile and screw speed were the same for all materials. Zone 1 was water cooled and the temperatures in zone 2 to 7 were set to 240°C, 240 °C, 240 °C, 230 °C, 230 °C, 230 °C and 230 °C, respectively. The screw speed was 250 rpm.

In Example 4, the extruder was equipped with a resin feeder, side stuffer, top feeder, water bath and a pelletizer system. Z-101 was starve-fed in zone 1 via a volumetric pellet feeder and passed through a set of kneading blocks to ensure its complete melting before glass bubbles and glass fibers were introduced simultaneously into a side feeder in zone 4 via two individual volumetric feeders. High channel depth conveying elements (D0/Di: 1.75) were used in zone 4 as well as subsequent zones. Temperature profile and screw speed were the same for all materials. Zone 1 was water cooled and the temperatures in zone 2 to 7 were set to 270°C, 275 °C, 280 °C, 280 °C, 280 °C, 280 °C and 280 °C, respectively. The screw speed was 250 rpm.

In Example 5, the extruder was equipped with a resin feeder, side stuffer, top feeder, water bath and a pelletizer system. PP was fed starve-fed in zone 1 via a volumetric pellet feeder and passed through a set of kneading blocks to ensure its complete melting before glass bubbles were introduced into a side feeder in zone 4 via a volumetric feeder. Talc was also fed via a volumetric feeder in Zone 1. High channel depth conveying elements (D0/Di: 1.75) were used in zone 4 as well as subsequent zones. Temperature profile and screw speed were the same for all materials. Zone 1 was the PP resin feed region and cooled with water. The temperatures in zone 2 to 7 were set to 190 °C, 220 °C, 220 °C, 220 °C, 220 °C, 220 °C respectively. The die temperature was set to 220 °C. The screw rotation speed was set to 300 rpm.

Microcellular Injection Molding

Test specimens were molded in a Mucell®-enabled Engel injection molding machine with the specifications shown in Table 3 using a mold to obtain ASTM Type I tensile test specimens (as described in ASTM D638-10: Standard Test Method for Tensile Properties of Plastics).

TABLE 3

| Injection Molding Machine | |
| --- | --- |
| Model No | ES200/100TL |
| Serial No-Ton-year | 70703/100/01 |
| Manufacture Date | 01/2001 |
| Manufactured by | Engel Canada, Inc. Guelph, Ontario, Canada |
| SCF system Model # | TR 3.5000G |
| SCF System Serial No | 00.41 |

Injection molding parameters shown in Table 4 were kept constant for all samples in a particular Example, except the shot size, which was varied depending on the composition as detailed below. Shot size was used to adjust foaming in the mold cavity. Shot size was decreased to a point where a full sample could not be molded. % SCF is defined as percent of the total part weight. It is calculated using the following formula.

$$\%SCF = SCF\ Dosing\ Time\ \times\ 12.6\ \times\ SCF\ Flowrate\ /\ Shot\ weight\ in\ grams$$

TABLE 4

|  | Injection Molding Process Parameters | | | | | |
|---|---|---|---|---|---|---|
|  | Example 1A, 1B, 1C | Example 1D | Example 2A, 2B, 2C | Example 3A, 3B, 3C | Example 4A, 4B, 4C, 4D, 4E | Example 5A, 5B |
| Screw rpm | 30 /min | 75 | 30 /min | 30 /min | 110 /min | 30 /min |
| Melt Pressure | 13.8 MPa | 12.1 MPa | 13.8 MPa | 13.8 MPa | 11 MPa | 13.8 MPa |
| Cooling time | 50 sec | 25 sec | 50 sec | 50 sec | 20 sec | 50 sec |
| Nozzle 1 Temperature | 240 °C | 240 °C | 205 °C | 240 °C | 307 °C | 240 °C |
| Nozzle 2 Temperature | 221 °C | 221 °C | 205 °C | 221 °C | 282 °C | 221 °C |
| Barrel 3 Temperature | 221 °C | 221 °C | 205 °C | 221 °C | 282 °C | 221 °C |
| Barrel 4 Temperature | 210 °C | 210 °C | 196 °C | 196 °C | 285 °C | 196 °C |
| Barrel 5 Temperature | 200 °C | 200 °C | 187 °C | 187 °C | 282 °C | 187 °C |
| SCF Type | $CO_2$ | $N_2$ | $CO_2$ | $CO_2$ | $N_2$ | $CO_2$ |

Test Methods

Density

Density of the injection molded parts was measured from the known weight of the injection molded parts divided by the volume of the specimens. The volume of the specimens was determined from the known molded weight of unfilled homopolymer polypropylene "Profax" 6523 from LyondellBasell and its known density (0.9 g/cc) as measured by Micromeritics AccuPyc 1330 Gas Pycnometer in a 10cc cup using helium gas as the displacement medium.

Mechanical properties of the injection-molded composites were measured using ASTM standard test methods listed in Table 5 and a modified version of ASTM D790.

TABLE 5

| Test | Designator | ASTM # |
|---|---|---|
| Tensile Modulus (MPa) | TM | D-638 |
| Tensile Strength (MPa) | TS | D-638 |
| Elongation at break (%) | EL | D-638 |
| Notched Izod Impact (J/m) | NI | D-256 |
| Flexural Modulus (MPa) | FM | D-790* |
| Flexural Strength (MPa) | FS | D790* |
| * FM and FS were measured using a modified version of ASTM D-790 three point bending test, the modification being that the test specimens used were ASTM type 1 test specimens typically used in ASTM D-638. | | |

Table 6 shows the effect of hollow glass microspheres and glass fibers on the density and the mechanical properties attained in microcellular polymers.

TABLE 6

| Example | Shot Size mm (in) | SCF % (type) | Foam | NI (J/m) | TM (MPa) | TS (MPa) | EL (%) | FM (MPa) | FS (MPa) | Density (g/cc) |
|---|---|---|---|---|---|---|---|---|---|---|
| 1A | 51 (2.0) | 0 | No | 43 | 1170 | 29.5 | No B | 1413 | 41 | 0.90 |
| 1A | 47 (1.85) | 5.07 ($CO_2$) | Yes | 41 | 1014 | 24.1 | 15 | 1255 | 41 | 0.80 |
| 1B | 51 (2.0) | 0 ($CO_2$) | No | 20 | 1510 | 17.2 | 40 | 1572 | 34 | 0.84 |
| 1B | 47 (1.85) | 5.18 ($CO_2$) | Yes | 20 | 1295 | 15.6 | 38 | 1586 | 33 | 0.79 |
| 1B | 41 (1.60) | 5.26 ($CO_2$) | Yes | 21 | 1355 | 15.3 | 19 | 1496 | 32 | 0.78 |
| 1B | 37 (1.45) | 5.70 ($CO_2$) | Yes | 24 | 1220 | 13.3 | 8 | 1455 | 30 | 0.71 |
| 1B | 36 (1.40) | 5.87 ($CO_2$) | Yes | 26 | 1134 | 12.6 | 6 | 1310 | 26 | 0.70 |
| 1B | 35 (1.38) | 6.03 ($CO_2$) | Yes | 23 | 1078 | 12 | 6 | 1241 | 26 | 0.68 |
| 1C | 47 (1.85) | 5.18 ($CO_2$) | Yes | 30 | 1350 | 23.3 | 4 | 1551 | 42 | 0.80 |
| 1C | 37 (1.45) | 5.70 ($CO_2$) | Yes | 26 | 1050 | 17 | 3.5 | 1220 | 30 | 0.68 |
| 1D | 39 (1.55) | 0.5 ($N_2$) | Yes | 28 | 1150 | 21.7 | 5 | 1275 | 34 | 0.71 |
| 2A | 44 (1.75) | 0 ($CO_2$) | No | 39.9 | 4245 | 66.5 | 2.9 | 3170 | 103 | 1.040 |
| 2A | 34 (1.35) | 3.19 ($CO_2$) | Yes | 36.9 | 3338 | 50.4 | 2.7 | 2778 | 81 | 0.871 |
| 2B | 34 (1.35) | 3.24 ($CO_2$) | Yes | 33.5 | 3522 | 42.0 | 2.2 | 2923 | 75 | 0.858 |
| 2C | 34 (1.35) | 3.19 ($CO_2$) | Yes | 29.2 | 3500 | 35.0 | 2.8 | 2826 | 66 | 0.836 |
| 3A | 44 1.75 | 0 ($CO_2$) | No | 665 | 1880 | 19.6 | 120 | 1661 | 33.8 | 1.03 |
| 3A | 39 1.55 | 3.08 ($CO_2$) | Yes | 214 | 1575 | 16.2 | 26 | 1690 | 32.4 | 0.911 |
| 3A | 37 (1.45) | 3.12 ($CO_2$) | Yes | 238 | 1490 | 15.6 | 22 | 1690 | 31.7 | 0.898 |
| 3B | 37 (1.45) | 3.36 ($CO_2$) | Yes | 131 | 1200 | 12.5 | 35 | 1413 | 27.6 | 0.833 |
| 3B | 34 (1.35) | 3.56 ($CO_2$) | Yes | 161 | 1165 | 12.1 | 20 | 1420 | 26.2 | 0.787 |

(continued)

| Example | Shot Size mm (in) | SCF % (type) | Foam | NI (J/m) | TM (MPa) | TS (MPa) | EL (%) | FM (MPa) | FS (MPa) | Density (g/cc) |
|---|---|---|---|---|---|---|---|---|---|---|
| 3C | 39 (1.55) | 3.16 ($CO_2$) | Yes | 88 | 1824 | 10.1 | 32 | 1720 | 24.8 | 0.886 |
| 3C | 34 (1.35) | 3.54 ($CO_2$) | Yes | 97 | 1546 | 9.0 | 11 | 1655 | 23.4 | 0.793 |
| 4A | N/A* | 0 | No | 53.4 | 1940 | 79.5 | 5.9 | 2260 | 113 | 1.125 |
| 4A | (39) 1.55 | 0.16 ($N_2$) | Yes | 57.1 | 1866 | 72.5 | 15.1 | 2178 | 107 | 1.062 |
| 4A | 37 (1.45) | 0.16 ($N_2$) | Yes | 57.4 | 1770 | 70.7 | 15.1 | 2247 | 110 | 1.056 |
| 4A | 34 (1.35) | 0.19 ($N_2$) | Yes | 18.6 | 1580 | 57.2 | 7.8 | 1900 | 95 | 0.924 |
| 4B | N/A* | 0 | No | 31.3 | 2685 | 92.7 | 4.2 | 3268 | 147 | 1.200 |
| 4B | 39 (1.55) | 0.16 ($N_2$) | Yes | 30.4 | 2410 | 70.3 | 3.5 | 3350 | 130 | 1.082 |
| 4B | 37 (1.45) | 0.17 (N2) | Yes | 30.9 | 2127 | 60.9 | 3.4 | 2990 | 120 | 0.992 |
| 4B | 34 (1.35) | 0.19 ($N_2$) | Yes | 30.2 | 1985 | 57.8 | 3.4 | 3010 | 114 | 0.927 |
| 4C | 39 (1.55) | 0.16 ($N_2$) | Yes | 31.5 | 2715 | 86.4 | 4.3 | 3847 | 141 | 1.097 |
| 4C | 37 (1.45) | 0.17 ($N_2$) | Yes | 30.3 | 2463 | 76.5 | 4.1 | 3668 | 131 | 1.040 |
| 4C | 34 (1.35) | 0.18 ($N_2$) | Yes | 29.3 | 2430 | 68.1 | 3.7 | 3605 | 111 | 0.9697 |
| 4D | N/A* | 0 | No | 29.1 | 2871 | 92.7 | 4.0 | 3502 | 145 | 1.167 |
| 4D | 39 (1.55) | 0.16 ($N_2$) | Yes | 29.8 | 2645 | 81.2 | 3.8 | 3654 | 138 | 1.103 |
| 4D | 37 (1.45) | 0.17 ($N_2$) | Yes | 28.0 | 2570 | 78.8 | 3.5 | 3455 | 125 | 1.038 |
| 4D | 34 (1.35) | 0.18 ($N_2$) | Yes | 27.2 | 2345 | 66.4 | 3.4 | 3192 | 115 | 0.977 |
| 4E | N/A* | 0 | No | 26.1 | 2850 | 86.7 | 3.7 | 3867 | 139 | 1.128 |
| 4E | 39 (1.55) | 0.16 ($N_2$) | Yes | 27.4 | 2770 | 75.6 | 3.4 | 3930 | 126 | 1.042 |
| 4E | 37 (1.45) | 0.17 ($N_2$) | Yes | 27.1 | 2511 | 68.1 | 3.3 | 3570 | 111 | 1.004 |
| 4E | 34 (1.35) | 0.18 ($N_2$) | Yes | 25.6 | 2302 | 55.5 | 2.8 | 3309 | 104 | 0.936 |
| 5A | 39 (1.55) | 3.08 ($CO_2$) | Yes | 28.7 | 1200 | 19 | 6 | 1430 | 33 | 0.8 |

(continued)

| Example | Shot Size mm (in) | SCF % (type) | Foam | NI (J/m) | TM (MPa) | TS (MPa) | EL (%) | FM (MPa) | FS (MPa) | Density (g/cc) |
|---|---|---|---|---|---|---|---|---|---|---|
| 5B | 39 1.55 | 3.08 ($CO_2$) | Yes | 26 | 1120 | 16.3 | 6 | 1520 | 36 | 0.74 |

* N/A indicates that the reported mechanical properties are for materials in their native form, not prepared by the microcellular process.
$CO_2$ stands for Carbon dioxide
$N_2$ stands for diatomic Nitrogen

**Claims**

1. A composite material comprising hollow glass microspheres and a microcellular thermoplastic resin.

2. The composite material of claim 1 wherein a thermoplastic resin identical in chemical composition to the microcellular thermoplastic resin of claim 1, which identical thermoplastic resin is not microcellular, the identical thermoplastic resin has a density P and the composite material has a density that is less than 0.88P.

3. The composite material of claims 1 or 2, further comprising glass fibers.

4. The composite material of any of the preceding claims, wherein the microcellular thermoplastic resin is selected from polypropylene, polyethylene, polyamide, and a combination thereof.

5. The composite material of any of the preceding claims, further comprising a particulate filler selected from the group consisting of talc, wollastonite, glass fiber, calcium carbonate, carbon black, molded in color pigments.

6. A molded article comprising hollow glass microspheres and a microcellular thermoplastic resin.

7. A method comprising:

   feeding to a microcellular foam injection molding machine a first pre-compounded material that comprises an admixture of a thermoplastic and hollow glass microspheres;
   injecting a supercritical fluid into the admixture and blending the admixture and the supercritical fluid at high pressure to form a blend; and
   injecting the blend into a molding tool.

8. The method of claim 7 wherein the admixture further comprises particulate fillers selected from the group consisting of talc, wollastonite, glass fiber, calcium carbonate, carbon black, molded in color pigments.

9. The method of claim 7 or 8, further comprising:

   feeding to the admixture in the injection molding machine a supercritical fluid selected from the group consisting of $CO_2$ and $N_2$ ; and
   blending the admixture and the supercritical fluid within the microcellular foam injection molding machine to form a uniform blend.

10. A method comprising:

    dry blending a first material that comprises a pre-compounded admixture masterbatch of a thermoplastic and hollow glass microspheres with a second thermoplastic material to produce a first blend;
    feeding the blend to a microcellular foam injection molding machine;
    injecting a supercritical fluid into the blend at high pressure to form a second blend; and
    injecting the second blend into a molding tool.

11. The method of claim 10 further comprising:

feeding to the admixture in the injection molding machine a supercritical fluid selected from the group consisting of $CO_2$ and $N_2$; and

blending the admixture and the supercritical fluid within the microcellular foam injection molding machine to form a uniform blend.

12. A method comprising:

feeding to a microcellular foam injection molding machine a dry blend comprising a thermoplastic, hollow microspheres and a supercritical fluid selected from the group consisting of $CO_2$ and $N_2$;

blending the dry blend and the supercritical fluid within the microcellular injection molding machine to form a molten blend; and

injecting the blend into a molding tool.

13. The method of claim 12 further comprising adding a surface binding agent to the dry blend before injecting the blend into the molding tool.

14. The method of claim 12 wherein the dry blend further comprises a mineral oil.

**Patentansprüche**

1. Verbundstoffmaterial, das hohle Glasmikrokugeln und ein mikrozellulares thermoplastisches Harz umfasst.

2. Verbundstoffmaterial nach Anspruch 1, wobei ein thermoplastisches Harz eine chemische Zusammensetzung aufweist, die identisch mit dem mikrozellularen thermoplastischen Harz aus Anspruch 1 ist, wobei das identische thermoplastische Harz nicht mikrozellular ist, wobei das identische thermoplastische Harz eine Dichte P aufweist und das Verbundstoffmaterial eine Dichte von weniger als 0,88P aufweist.

3. Verbundstoffmaterial nach den Ansprüchen 1 oder 2, das ferner Glasfasern umfasst.

4. Verbundstoffmaterial nach einem der vorhergehenden Ansprüche, wobei das mikrozellulare thermoplastische Harz ausgewählt ist aus Polypropylen, Polyethylen, Polyamid, und einer Kombination davon.

5. Verbundstoffmaterial nach einem der vorhergehenden Ansprüche, das ferner einen teilchenförmigen Füllstoff umfasst. ausgewählt aus der Gruppe bestehend aus Talk, Wollastonit, Glasfaser, Calciumcarbonat, Rußschwarz, in Farbpigmenten geformt.

6. Geformter Artikel, der hohle Glasmikrokugeln und ein mikrozellulares thermoplastisches Harz umfasst.

7. Verfahren, umfassend:

Zuführen eines ersten zuvor hergestellten Materials, das eine Beimischung aus einem Thermoplasten und hohlen Glasmikrokugeln umfasst, zu einer mikrozellularen Schaumspritzgießmaschine;

Einspritzen eines überkritischen Fluids in die Beimischung und Vermengen der Beimischung und des überkritischen Fluids bei hohem Druck, um eine Abmischung zu bilden; und

Einspritzen der Abmischung in ein Formwerkzeug.

8. Verfahren nach Anspruch 7, wobei die Beimischung ferner teilchenförmige Füllstoffe umfasst, ausgewählt aus der Gruppe bestehend aus Talk, Wollastonit, Glasfaser, Calciumcarbonat, Rußschwarz, in Farbpigmenten geformt.

9. Verfahren nach Anspruch 7 oder 8, das ferner Folgendes umfasst:

Zuführen eines überkritischen Fluids, ausgewählt aus der Gruppe bestehend aus $CO_2$ und $N_2$, zu der Beimischung in der Spritzgießmaschine; und

Vermengen der Beimischung und des überkritischen Fluids in der mikrozellularen Schaumspritzgießmaschine, um eine einheitliche Abmischung zu bilden.

10. Verfahren, umfassend:

trockenes Vermengen eines ersten Materials, das einen zuvor hergestellten Beimengungs-Masterbatch aus einem Thermoplasten und hohlen Glasmikrokugeln umfasst, mit einem zweiten thermoplastischen Material, um eine erste Abmischung zu erzeugen;
Zuführen der Abmischung zu einer mikrozellularen Schaumspritzgießmaschine;
Einspritzen eines überkritischen Fluids in die Abmischung bei hohem Druck, um eine zweite Abmischung zu erzeugen; und
Einspritzen der zweiten Abmischung in ein Formwerkzeug.

11. Verfahren nach Anspruch 10, ferner umfassend:

Zuführen eines überkritischen Fluids, ausgewählt aus der Gruppe bestehend aus $CO_2$ und $N_2$, zu der Beimischung in der Spritzgießmaschine; und
Vermengen der Beimischung und des überkritischen Fluids in der mikrozellularen Schaumspritzgießmaschine, um eine einheitliche Abmischung zu bilden.

12. Verfahren, umfassend:

Zuführen einer trockenen Abmischung, die einen Thermoplasten, hohle Mikrokugeln und ein überkritisches Fluid, ausgewählt aus der Gruppe bestehend aus $CO_2$ und $N_2$, umfasst, zu einer mikrozellularen Schaumspritzgießmaschine;
Vermengen der trockenen Abmischung und des überkritischen Fluids in der mikrozellularen Schaumspritzgießmaschine, um eine geschmolzene Abmischung zu bilden; und
Einspritzen der Abmischung in ein Formwerkzeug.

13. Verfahren nach Anspruch 12, das ferner das Zugeben eines Oberflächenbindungsmittels zu der trockenen Abmischung vor dem Einspritzen der Abmischung in das Formwerkzeug umfasst.

14. Verfahren nach Anspruch 12, wobei die trockene Abmischung ferner ein Mineralöl umfasst.


**Revendications**

1. Matériau composite comprenant des microsphères de verre creuses et une résine thermoplastique microcellulaire.

2. Matériau composite selon la revendication 1, dans lequel se trouve une résine thermoplastique de composition chimique identique à la résine thermoplastique microcellulaire selon la revendication 1, laquelle résine thermoplastique identique n'est pas microcellulaire, la résine thermoplastique identique a une masse volumique P et le matériau composite a une masse volumique qui est inférieure à 0,88 P.

3. Matériau composite selon les revendications 1 ou 2, comprenant en outre des fibres de verre.

4. Matériau composite selon l'une quelconque des revendications précédentes, dans lequel la résine thermoplastique microcellulaire est choisie parmi le polypropylène, le polyéthylène, le polyamide et une combinaison de ceux-ci.

5. Matériau composite selon l'une quelconque des revendications précédentes, comprenant en outre une charge particulaire choisie dans le groupe constitué de talc, wollastonite, fibre de verre, carbonate de calcium, noir de carbone, pigments colorés intégrés au moulage.

6. Article moulé comprenant des microsphères de verre creuses et une résine thermoplastique microcellulaire.

7. Procédé comprenant les étapes consistant à :

alimenter à une machine de moulage par injection de mousse microcellulaire un premier matériau préformulé qui comprend un mélange d'un thermoplastique et de microsphères de verre creuses ;
injecter un fluide surcritique dans le mélange et combiner le mélange et le fluide surcritique à pression élevée pour former une combinaison ; et

injecter la combinaison dans un outil de moulage.

8. Procédé selon la revendication 7, dans lequel le mélange comprend en outre des charges particulaires choisies dans le groupe constitué de talc, wollastonite, fibre de verre, carbonate de calcium, noir de carbone, pigments colorés intégrés au moulage.

9. Procédé selon la revendication 7 ou 8, comprenant en outre :

l'alimentation au mélange dans la machine de moulage par injection d'un fluide surcritique choisi dans le groupe constitué de $CO_2$ et $N_2$ ; et
la combinaison du mélange et du fluide surcritique au sein de la machine de moulage par injection de mousse microcellulaire pour former une combinaison homogène.

10. Procédé comprenant les étapes consistant à :

combiner à sec un premier matériau qui comprend un mélange-maître de mélange préformulé d'un thermoplastique et de microsphères de verre creuses avec un deuxième matériau thermoplastique pour produire une première combinaison ;
alimenter la combinaison à une machine de moulage par injection de mousse microcellulaire ;
injecter un fluide surcritique dans la combinaison à pression élevée pour former une deuxième combinaison ; et
injecter la deuxième combinaison dans un outil de moulage.

11. Procédé selon la revendication 10, comprenant en outre :

l'alimentation au mélange dans la machine de moulage par injection d'un fluide surcritique choisi dans le groupe constitué de $CO_2$ et $N_2$ ; et
la combinaison du mélange et du fluide surcritique au sein de la machine de moulage par injection de mousse microcellulaire pour former une combinaison homogène.

12. Procédé comprenant les étapes consistant à :

alimenter à une machine de moulage par injection de mousse microcellulaire d'une combinaison sèche comprenant des microsphères thermoplastiques creuses et un fluide surcritique choisi dans le groupe constitué de $CO_2$ et $N_2$ ;
combiner la combinaison sèche et le fluide surcritique au sein de la machine de moulage par injection microcellulaire pour former un mélange fondu ; et
injecter la combinaison dans un outil de moulage.

13. Procédé selon la revendication 12, comprenant en outre l'ajout d'un agent de liaison de surface à la combinaison sèche avant d'injecter la combinaison dans l'outil de moulage.

14. Procédé selon la revendication 12, dans lequel la combinaison sèche comprend en outre une huile minérale.

*FIG. 1a*

*FIG. 1b*